(19) Europäisches Patentamt
European Patent Office
Office européen des brevets

(11) **EP 1 712 930 B1**

(12) **FASCICULE DE BREVET EUROPEEN**

(45) Date de publication et mention
de la délivrance du brevet:
**06.01.2010 Bulletin 2010/01**

(51) Int Cl.:
***G01S 5/14*** *(2006.01)*

(21) Numéro de dépôt: **06290593.0**

(22) Date de dépôt: **12.04.2006**

(54) **Système et procédé de détermination de la vitesse instantanée d'un objet**

System und Verfahren zur Ermittlung der Momentangeschwindigkeit eines Objektes

System and procedure for determining the instantaneous speed of an object

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL**

(30) Priorité: **15.04.2005 FR 0503803**

(43) Date de publication de la demande:
**18.10.2006 Bulletin 2006/42**

(73) Titulaire: **ALSTOM BELGIUM S.A.**
**6001 Charleroi (BE)**

(72) Inventeurs:
• **Franckart, Jean-Pierre**
**6061 Montignies-sur-Sambre (BE)**
• **Bortolotto, Mauro**
**6200 Chatelineau (BE)**

(74) Mandataire: **Domenego, Bertrand et al**
**Cabinet Lavoix**
**2, place d'Estienne d'Orves**
**75441 Paris Cedex 09 (FR)**

(56) Documents cités:
**WO-A-02/03094**     **US-A- 4 405 986**
**US-A- 5 977 909**    **US-A- 5 978 735**
**US-B1- 6 292 132**

# EP 1 712 930 B1

**Description**

La présente invention concerne un système et un procédé de détermination de la vitesse instantanée en sécurité d'un objet circulant sur une trajectoire connue, notamment d'un véhicule tel qu'un train.

La demande de brevet WO 02/03094 déposée le 29 juin 2001 décrit un système de localisation en sécurité d'un objet, tel qu'un train, à partir des émissions de signaux effectuées par une constellation de satellites GNSS (Global Navigation Satellite System - système de navigation globale par satellite).

Des systèmes de localisation en sécurité d'un objet utilisant des satellites sont décrits dans la demande de brevet US-A-5 978 735 (Gu et Al.) du 2 novembre 1999, le brevet US-B1-6 292 132 du 18 septembre 2001, la demande de brevet US-A-5 977 909 (Harrison et Al.) du 2 novembre 1999, et la demande de brevet US-A-4 405 986 (GRAY et al.).

Dans le monde ferroviaire, une localisation en sécurité s'entend au sens de la norme Cenelec 50129. Il s'agit de fournir un intervalle de localisation avec une probabilité extrêmement faible ($10^{-09}$ à $10^{-12}$) que le train puisse se trouver en dehors de cet intervalle.

Concernant la détermination de la vitesse instantanée, les systèmes antérieurs, basés classiquement sur des dispositifs électro-mécaniques, ont l'inconvénient d'être extrêmement coûteux. Ils utilisent en effet, pour améliorer la fiabilité, une combinaison de capteurs de rotation d'essieux devant supporter des accélérations de plus de 90 g, d'accéléromètres mono-axe et de radars embarqués.

Le but de l'invention est donc de proposer un système de détermination de la vitesse instantanée ayant la sécurité requise par le ferroviaire avec un coût très inférieur aux systèmes existants.

L'objet de l'invention est donc un système de détermination de la vitesse instantanée en sécurité d'un objet circulant sur une trajectoire connue, notamment d'un véhicule tel qu'un train, et ledit système comportant :

- des moyens de localisation approximative de l'objet et de direction de son déplacement, ainsi que
- des moyens de réception d'au moins un signal émis avec une fréquence prédéterminée, connue de l'objet, provenant d'au moins un satellite, et
- des moyens de calcul et d'analyse du signal comportant :

    - des moyens de mesure du décalage de la fréquence du signal reçu par rapport à la fréquence prédéterminée du signal émis, connectés à
    - des moyens de détermination de la différence vectorielle des vitesses de l'objet et du satellite selon la direction satellite-objet par calcul de l'effet Doppler ayant généré le décalage en fréquence, et
    - des moyens de calcul de la vitesse instantanée selon la direction du déplacement de l'objet à partir de la différence vectorielle déterminée précédemment. Les mesures du décalage en fréquence et les calculs associés sont répétés de façon indépendante sur des signaux provenant d'au moins deux satellites différents et les moyens de calcul et d'analyse comportent en outre des moyens de combinaison des résultats obtenus indépendamment pour obtenir une vitesse instantanée avec le niveau de sécurité désiré.

D'autres caractéristiques de l'invention sont :

- les moyens de calcul et d'analyse du signal de l'objet sont adaptés à la détermination du décalage en fréquence dû à l'effet Doppler de deux signaux provenant chacun de deux satellites distincts, les moyens de détermination de la vitesse instantanée de l'objet étant adaptés pour déterminer cette vitesse à partir du décalage en fréquence des deux signaux ;
- il utilise les signaux provenant de quatre satellites, les moyens de combinaison utilisant les vitesses instantanées obtenues par les moyens de calcul à partir de six couples de satellites, chaque satellite appartenant à au moins un couple ;
- les moyens de calcul et d'analyse du signal comportent en outre des moyens de référencement temporel stables, les moyens de détermination de la vitesse instantanée de l'objet étant adaptés pour déterminer cette vitesse à partir du décalage en fréquence dû à l'effet Doppler d'un seul signal provenant d'un unique satellite ;
- il utilise les signaux provenant de trois satellites ; et
- il comporte des moyens de réception du signal situés en deux points distincts de cet objet aptes à recevoir simultanément en ces deux points le signal, lesdits moyens de réception étant connectés à des moyens de calcul du chemin parcouru par le signal aptes à déterminer que le signal est parvenu aux deux points des moyens de réception par des chemins différents et à supprimer alors pendant une durée prédéterminée le satellite émetteur de ce signal de la liste des satellites sur lesquels les calculs de vitesse définis précédemment sont autorisés.

Un autre objet de l'invention est un procédé de détermination de la vitesse instantanée d'un objet circulant sur une trajectoire connue qui comporte les étapes de :

- détermination de la localisation approximative et de la direction de déplacement dudit objet,
- réception d'au moins un signal émis avec une fréquence prédéterminée, connue de l'objet, provenant d'au moins un satellite,
- mesure de la fréquence du signal reçu par l'objet,
- mesure du décalage de la fréquence du signal reçu par rapport à la fréquence prédéterminée du signal émis,
- détermination de la différence vectorielle des vitesses de l'objet et du satellite selon la direction satellite-objet par calcul de l'effet Doppler ayant généré le décalage en fréquence, et
- calcul de la vitesse instantanée de l'objet selon la direction de déplacement de l'objet à partir de la vitesse instantanée déterminée précédemment.

L'invention sera mieux comprise à la lecture de la description qui va suivre, donnée uniquement à titre d'exemple, et faite en référence aux dessins dans lesquels :

- la figure 1 est un schéma synoptique d'un mode de réalisation préféré de l'invention ;
- la figure 2 est un schéma synoptique des moyens de calcul et d'analyse du signal ;
- la figure 3 est un schéma illustrant la composition des vitesses ; et
- la figure 4 est un schéma synoptique d'une variante de réalisation de l'invention.

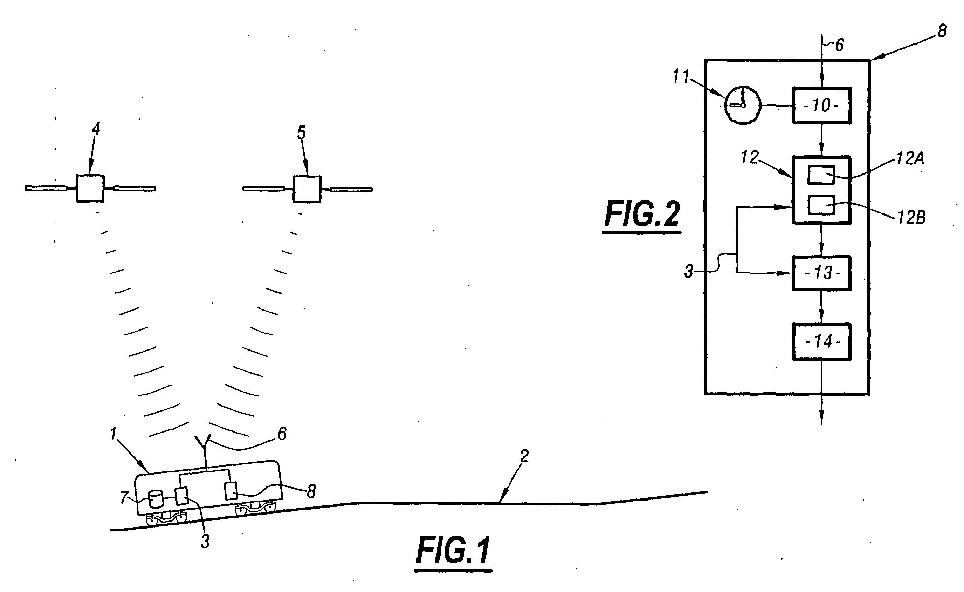

Le système de la détermination de la vitesse instantanée est décrit en référence à la figure 1.

Soit un objet 1 qu'on supposera être un train, à titre d'exemple, circulant sur une trajectoire connue 2.

Il comporte des moyens 3 de localisation du type de ceux décrits dans la demande PCT WO 02/03094 et donc capables de déterminer en sécurité la position du train 1 sur la voie à partir de signaux provenant d'une constellation de satellites GNSS 4, 5 et de la cartographie du réseau sur lequel circule le train.

Le train 1 est équipé de moyens 6 de réception des signaux émis par ces satellites 4, 5. Ces moyens 6 de réception comportent des antennes et des modules électroniques fonctionnant en hyperfréquence, comme il est bien connu de l'homme du métier, reliés aux moyens 3 de localisation pour fournir à ceux-ci les signaux provenant des satellites 4, 5.

Les moyens de localisation 3 sont connectés à une base de données 7 cartographique du réseau ferré. Cette base de données représente classiquement les voies sous forme d'une succession de segments de droite dont chaque extrémité est exprimée dans le système de coordonnées WGS84 du système GNSS.

Comme expliqué dans la demande de brevet WO 02/03094, ces moyens de localisation 3 donnent un intervalle de localisation du train avec une probabilité inférieure à $10^{-9}$ que le train puisse se trouver en dehors de cet intervalle.

Cet intervalle de localisation permet de déterminer la direction de déplacement.

En fonction du parcours de la voie, la direction de déplacement est entachée d'une imprécision angulaire variable. Cette imprécision est liée à deux facteurs :

- l'imprécision de la base de données cartographique puisque, comme indiqué précédemment, la voie est modélisée sous forme d'une succession de segments de droite ; et
- l'imprécision liée à la localisation. En effet, si l'intervalle de localisation correspond à une section de voie rectiligne, alors la direction est parfaitement connue. Par contre, si la section de voie est courbe, alors l'intervalle de localisation peut recouvrir plusieurs segments de droite ayant des directions différentes.

Le signal reçu des satellites 4, 5 par les moyens 6 de réception est également transféré à des moyens 8 de calcul et d'analyse de ce signal.

Ceux-ci comportent, figure 2, des moyens 10 de mesure du décalage en fréquence du signal reçu, pour chaque satellite, par référence à une horloge atomique interne 11. Ce décalage en fréquence est dû à l'effet Doppler provoqué par les vitesses relatives du train 1 et du satellite.

Ces moyens 10 de mesure sont donc connectés à des moyens 12 de détermination de la différence vectorielle des vitesses du train et du satellite selon la direction satellite-objet par calcul de l'effet Doppler ayant généré le décalage en fréquence, eux-mêmes connectés à des moyens 13 de calcul de la vitesse instantanée selon la direction du déplacement de l'objet à partir de la vitesse instantanée déterminée précédemment.

En effet, ce décalage de fréquence est généré par l'effet Doppler selon la formule :

$$f_R = f_T (1 - \frac{\overrightarrow{v_r} \bullet \overrightarrow{a}}{c}) \quad (1)$$

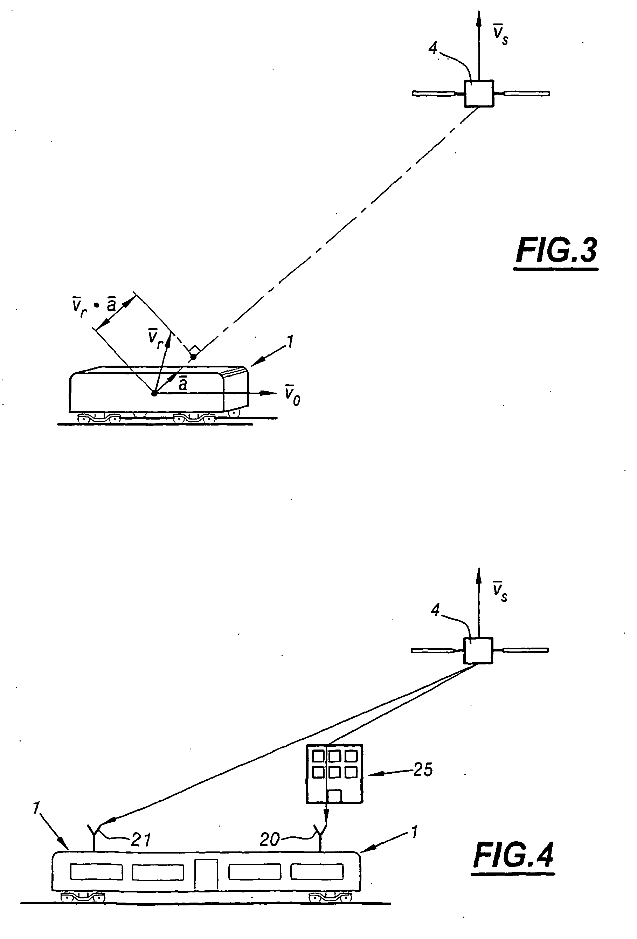

où $f_R$ est la fréquence du signal reçu, $f_T$ la fréquence du signal transmis par le satellite, $\vec{v_r}$ est le vecteur vitesse relative satellite-objet, figure 3, $\vec{a}$ est le vecteur unitaire pointant le long de la ligne allant de l'objet vers le satellite, appelée la ligne de vue, et c la vitesse de la lumière.

Le produit $\vec{v_r} \cdot \vec{a}$ correspond à la projection du vecteur vitesse relative sur la ligne de vue du satellite.

Le vecteur $\vec{v_r}$ de la vitesse relative correspond à la différence des vecteurs vitesse du satellite $\vec{v_s}$ et du vecteur vitesse de l'objet $\vec{v_o}$

$$\vec{v_r} = \vec{v_s} - \vec{v_o} \quad (2)$$

Les moyens 12 de détermination de la différence vectorielle des vitesses comportent des moyens 12A de calcul de la vitesse $\vec{v_s}$ du satellite par utilisation des informations d'éphéméride et du modèle orbital du satellite, informations qui sont téléchargées des satellites durant une étape précédente.

Ils comportent également des moyens 12B de calcul du vecteur $\vec{a}$ unitaire de la ligne de vue à partir de la position de l'objet et de la position du satellite.

Les moyens 12 de détermination de la différence vectorielle des vitesses du train 1 et du satellite selon la direction satellite - objet, c'est-à-dire de $(\vec{v_s}-\vec{v_o}) \cdot \vec{a}$ calculent celle-ci selon l'équation :

$$\Delta f = f_R - f_T = -f_T \frac{(\vec{v_s} - \vec{v_o}) \cdot \vec{a}}{c} \quad (3)$$

qui se déduit des équations (1) et (2).

Les moyens 13 de calcul de la vitesse instantanée du train selon la direction de déplacement de celui-ci sont effectués à partir de la vitesse instantanée de l'objet selon la direction satellite-objet déterminée précédemment, soit $\vec{v_o} \cdot \vec{a}$ et de la valeur du vecteur $\vec{a}$ exprimée dans le référentiel local de la voie (où la vitesse du train a une composante unique le long de la voie).

Ces mesures et calculs sont répétés pour plusieurs satellites différents de façon indépendante. La combinaison effectuée par des moyens 14 des résultats obtenus, permet alors de déterminer un intervalle de confiance de la vitesse avec une probabilité faible ($10^{-09}$ à $10^{-12}$) d'être en dehors.

Ainsi trois mesures sur trois satellites différents, faites chacune avec un intervalle de confiance ayant une probabilité d'erreur de $10^{-5}$ à $10^{-6}$, permettent d'obtenir en première approche, car ce sont des mesures indépendantes, un intervalle de confiance avec une probabilité meilleure que $10^{-15}$. En fait, il apparaît que, à cause de certaines erreurs, la probabilité obtenue avec trois satellites n'est que de l'ordre de $10^{-12}$.

Les mesures effectuées par les moyens 11 de mesure de décalage de la fréquence sont entachées d'un certain nombre d'erreurs telles que le taux de décalage $\dot{\delta t_0}$ de l'horloge du récepteur par rapport au temps du système, le taux de décalage temporel $\dot{\delta t_D}$ dû aux phénomènes atmosphériques, au bruit du récepteur, ...et le taux de décalage $\dot{\delta t_S}$ de l'horloge du satellite par rapport au temps du système.

Dans le cas où le train embarque une horloge atomique, comme décrit ci-dessus, le taux de décalage $\dot{\delta t_0}$ de l'horloge du récepteur peut être considéré comme négligeable.

Cependant une horloge atomique étant un équipement relativement coûteux, il est particulièrement avantageux d'avoir un système qui ne nécessite pas son utilisation et donc qui permet d'annuler l'effet de $\dot{\delta t_0}$.

En exprimant cette mesure de décalage de fréquence sous forme de variation temporelle de distance, c'est-à-dire en multipliant le décalage en fréquence dû à l'effet Doppler par la longueur d'onde du signal, alors la variation temporelle de la distance mesurée train-satellite $\dot{\rho}$ (en anglais « pseudo range-rate ») est telle que

$$\dot{\rho} = \dot{R} + c\dot{\delta t_o} - c\dot{\delta t_s} + c\dot{\delta t_D} \quad (4)$$

où R est la variation temporelle de la distance géométrique train-satellite (en anglais « geometric range rate »).

Sachant que le taux de décalage de l'horloge du satellite, déduit à partir du message de navigation du satellite, se résume à une constante appelée $af_1$

alors

$$\dot{\rho} = \dot{R} + c\dot{\delta t}_o - caf_1 + c\dot{\delta t}_D \qquad (5)$$

En exprimant l'équation (3) pour faire apparaître la variation temporelle de distance,

$$\dot{R} = -\lambda_T \Delta f = \lambda_T f_T \frac{(\vec{v}_S - \vec{v}_O) \bullet \vec{a}}{c} = c\frac{(\vec{v}_S - \vec{v}_O) \bullet \vec{a}}{c} = (\vec{v}_S - \vec{v}_O) \bullet \vec{a} \quad (6)$$

Par définition cette variation temporelle de distance est égale à - $\lambda \bullet$ *Doppler.*

Ainsi la variation temporelle de distance mesurée $\dot{\rho}$ s'exprime comme moins le produit de la longueur d'onde du signal par l'effet Doppler déterminé par le récepteur ($L_1$ Doppler), $\dot{\rho}$=-$\lambda T \cdot L_1$ *doppler.*

Alors, la combinaison des équations (5) et (6) donne :

$$\vec{v_O} \bullet \vec{a} = \vec{v_S} \bullet \vec{a} + \lambda_T \cdot L_1 doppler + c\dot{\delta t}_O - caf_1 + c\dot{\delta t}_D \qquad (7)$$

En utilisant les signaux provenant de deux satellites $s_1$ et $s_2$, et en combinant les équations (7) correspondantes on obtient :

$$\vec{v_O} \bullet (\vec{a}_{s2} - \vec{a}_{s1}) = \vec{v}_{s2} \bullet \vec{a}_{s2} - \vec{v}_{s1} \bullet \vec{a}_{s1} + \lambda_T (L_1 Doppler_{s2} - L_1 Doppler_{s1})$$
$$- c(af_1^{s2} - af_1^{s1}) + c(\dot{\delta t}_{DS2} - \dot{\delta t}_{DS1}).$$

Le taux de décalage $\dot{\delta t}_0$ provenant de l'horloge réceptrice est éliminé.

Ainsi, les moyens 12 de calcul de la différence vectorielle utilisent le décalage en fréquence relatif dû à l'effet Doppler de deux signaux provenant chacun de deux satellites distincts pour éliminer le décalage lié à l'horloge réceptrice, permettant ainsi de ne pas utiliser une horloge de précision telle qu'une horloge atomique, dans le train 1.

Cependant, pour obtenir la précision nécessaire à une détermination de la vitesse en sécurité, les mesures faites avec les signaux d'au moins trois satellites sont nécessaires quand on utilise une horloge atomique, comme expliqué précédemment.

Pour obtenir le même degré de précision sans utilisation d'horloge atomique et donc, en utilisant les calculs relatifs à deux satellites expliqués ci-dessus, il est nécessaire d'utiliser une constellation d'au moins quatre satellites formant donc six paires différentes, afin de disposer de l'équivalent de trois couples de mesures indépendantes.

Le procédé de détermination de la vitesse instantanée d'un objet circulant sur une trajectoire connue comporte les étapes de :

- détermination de la localisation approximative et de la direction de déplacement dudit objet,
- réception d'au moins un signal émis avec une fréquence prédéterminée, connue de l'objet, provenant d'au moins un satellite,
- mesure de la fréquence du signal reçu par l'objet,
- mesure du décalage de la fréquence du signal reçu par rapport à la fréquence prédéterminée du signal émis,
- détermination de la différence vectorielle des vitesses de l'objet et du satellite selon la direction satellite-objet par calcul de l'effet Doppler ayant généré le décalage en fréquence, et
- calcul de la vitesse instantanée de l'objet selon la direction de déplacement de l'objet à partir de la vitesse instantanée déterminée précédemment.

Tous les calculs précédents ont été faits en supposant que le signal suit un chemin direct entre le satellite et le train.

Or il est bien connu que les ondes peuvent se réfléchir sur certaines surfaces et donc qu'il est possible que le train réceptionne un signal réfléchi au lieu du signal direct.

On conçoit que cela amène un niveau d'erreur supplémentaire en faussant le décalage en fréquence du signal reçu.

Or, ce phénomène de « chemin alternatif » ne se produit que dans un environnement particulier comme le passage dans une zone urbaine.

Un moyen d'éliminer les signaux provenant de « chemin alternatif » consiste à installer deux antennes en des points distincts du train, typiquement à une vingtaine de mètres l'une de l'autre.

En effectuant une mesure de l'effet Doppler sur les signaux reçus simultanément sur chaque antenne, on détermine si cette mesure est différente ou non.

Si elle est différente, cela veut dire que le signal reçu par l'une des deux antennes provient d'un « chemin alternatif ».

En effet, figure 4, en progressant le train 1 pénètre, par exemple, dans une zone dans laquelle se trouve un immeuble 25. A ce moment, l'antenne 20 ne capte plus le signal direct provenant du satellite 4, contrairement à l'antenne 21, mais un signal réfléchi par cet immeuble 25.

Quelques instants plus tard, le train ayant progressé, la seconde antenne 21 pénètre à son tour dans la zone de l'immeuble 25.

A ce moment, les deux antennes captant le même signal réfléchi par l'immeuble 25, les moyens de mesure ne détectent plus de différence entre les deux signaux.

En conséquence, une temporisation est prévue sous forme d'un délai et d'une distance parcourue pendant laquelle le signal provenant du satellite 4 n'est pas utilisé, cette temporisation est réinitialisée à chaque observation d'une divergence. Le satellite 4 dans l'exemple, ne sera donc réutilisé qu'après qu'une certaine période de mesure cohérente soit observée et/ou que le train ait parcouru une certaine distance sans qu'une divergence soit observée. D'autres conditions peuvent y être associées.

Le système et le procédé ainsi décrits permettent donc avantageusement de déterminer la vitesse d'un train avec les niveaux de sécurité requis. Il est donc d'un coût très inférieur aux systèmes antérieurs car il n'utilise aucune pièce mécanique ou soumise à des contraintes environnementales fortes.

**Revendications**

1. Système de détermination de la vitesse instantanée en sécurité d'un objet (1) circulant sur une trajectoire connue, notamment d'un véhicule tel qu'un train, et ledit système comportant:

   - des moyens (3, 7) de localisation approximative de l'objet et de direction de son déplacement, ainsi que
   - des moyens (6) de réception d'au moins un signal émis avec une fréquence prédéterminée, connue de l'objet, provenant d'au moins un satellite (4, 5), et
   - des moyens (8) de calcul et d'analyse du signal comportant :
   - des moyens (10) de mesure du décalage de la fréquence du signal reçu par rapport à la fréquence prédéterminée du signal émis, connectés à
   - des moyens (12) de détermination de la différence vectorielle des vitesses de l'objet et du satellite selon la direction satellite-objet comme fonction du décalage en fréquence mesuré précédemment et résultant de l'effet Doppler, et

   **caractérisé en ce que** les moyens (8) de calcul et d'analyse comportent des moyens (13) de calcul de la vitesse instantanée selon la direction du déplacement de l'objet à partir de la différence vectorielle déterminée précédemment et de la direction de déplacement de l'objet, et

   **en ce que** les mesures du décalage en fréquence et les calculs associés sont répétés de façon indépendante sur des signaux provenant d'au moins deux satellites différents et **en ce que** les moyens (8) de calcul et d'analyse comportent en outre des moyens (14) de combinaison des résultats obtenus indépendamment pour obtenir une vitesse instantanée avec le niveau de sécurité désiré.

2. Système de détermination de la vitesse instantanée d'un objet selon la revendication 1, **caractérisé en ce que** les moyens (8) de calcul et d'analyse du signal de l'objet sont adaptés à la mesure du décalage en fréquence dû à l'effet Doppler de deux signaux provenant chacun de deux satellites (4, 5) distincts, les moyens (13) de détermination de la vitesse instantanée de l'objet étant adaptés pour déterminer cette vitesse à partir du décalage en fréquence des deux signaux.

3. Système de détermination de la vitesse instantanée d'un objet selon la revendication 2, **caractérisé en ce qu'**il utilise les signaux provenant de quatre satellites, les moyens (14) de combinaison utilisant les vitesses instantanées obtenues par les moyens (13) de calcul à partir de six couples de satellites, chaque satellite appartenant à au moins un couple.

**4.** Système de détermination de la vitesse d'un objet selon la revendication 1, **caractérisé en ce que** les moyens de calcul et d'analyse du signal comportent en outre des moyens de référencement temporel stables, les moyens de détermination de la vitesse instantanée de l'objet étant adaptés pour déterminer cette vitesse à partir du décalage en fréquence dû à l'effet Doppler d'un seul signal provenant d'un unique satellite.

**5.** Système de détermination de la vitesse d'un objet selon la revendication 4, **caractérisé en ce qu'**il utilise les signaux provenant de trois satellites.

**6.** Système de détermination de la vitesse instantanée d'un objet selon l'une des revendications précédentes, **caractérisé en ce qu'**il comporte des moyens de réception du signal situés en deux points distincts de cet objet aptes à recevoir simultanément en ces deux points le signal, lesdits moyens de réception étant connectés à des moyens de calcul du chemin parcouru par le signal aptes à déterminer que le signal est parvenu aux deux points des moyens de réception par des chemins différents et à supprimer alors pendant une durée prédéterminée le satellite émetteur de ce signal de la liste des satellites sur lesquels les calculs de vitesse définis précédemment sont autorisés.

**7.** Procédé de détermination de la vitesse instantanée d'un objet circulant sur une trajectoire connue comportant les étapes de :

- détermination de la localisation approximative et de la direction de déplacement dudit objet,
- réception d'au moins un signal émis avec une fréquence prédéterminée, connue de l'objet, provenant d'au moins un satellite,
- mesure de la fréquence du signal reçu par l'objet,
- mesure du décalage de la fréquence du signal reçu par rapport à la fréquence prédéterminée du signal émis,
- détermination de la différence vectorielle des vitesses de l'objet et du satellite selon la direction satellite-objet comme fonction du décalage en fréquence mesuré précédemment et résultant de l'effet Doppler, et

**caractérisé en ce qu'**il comprend l'étape de :

- calcul de la vitesse instantanée de l'objet selon la direction de déplacement de l'objet à partir de la différence vectorielle déterminée précédemment et de la direction de déplacement de l'objet.

## Claims

**1.** System for establishing the instantaneous speed, in a reliable manner, of an object (1) travelling on a known trajectory, in particular of a vehicle such as a train, and said system comprising:

- means (3, 7) for approximately locating the object and direction of its displacement, in addition to
- means (6) for receiving at least one signal emitted at a known, predetermined frequency of the object, from at least one satellite (4, 5) and
- means (8) for calculating and analysing the signal comprising:
- means (10) for measuring the frequency shift of the signal received relative to the predetermined frequency of the signal emitted, connected to
- means (12) for establishing the vectorial difference of the speeds of the object and of the satellite in the satellite-object direction according to the frequency shift measured previously and resulting from the Doppler effect, and

**characterised in that** the means (8) for calculating and analysing comprise means (13) for calculating the instantaneous speed in the direction of displacement of the object from the vectorial difference previously determined and the direction of displacement of the object, and

**in that** the measurements of the frequency shift and the associated calculations are repeated in an independent manner on signals from at least two different satellites and **in that** the means (8) for calculating and analysing further comprise means (14) for combining the results obtained independently in order to obtain an instantaneous speed with the desired level of reliability.

**2.** System for establishing the instantaneous speed of an object according to Claim 1, **characterised in that** the means (8) for calculating and analysing the signal of the object are adapted to the measurement of the frequency shift due to the Doppler effect of two signals, each from two separate satellites (4, 5), the means (13) for establishing the instantaneous speed of the object being designed to determine said speed from the frequency shift of the two signals.

3. System for establishing the instantaneous speed of an object according to Claim 2, **characterised in that** it uses the signals from four satellites, the means (14) for combining using the instantaneous speeds obtained by the means (13) for calculating from six pairs of satellites, each satellite belonging to at least one pair.

4. System for establishing the speed of an object according to Claim 1, **characterised in that** the means for calculating and analysing the signal further comprise means for stable time referencing, the means for establishing the instantaneous speed of the object being designed to determine this speed from the frequency shift due to the Doppler effect of a single signal from a single satellite.

5. System for establishing the speed of an object according to Claim 4, **characterised in that** it uses the signals from three satellites.

6. System for establishing the instantaneous speed of an object according to one of the preceding claims, **characterised in that** it comprises means for receiving the signal located at two separate points of said object and which are capable of simultaneously receiving the signal at these two points, said means for receiving being connected to means for calculating the path covered by the signal which are capable of establishing that the signal has reached the two points of the means for receiving via different paths and then removing, for a predetermined period of time, the satellite which emitted said signal from the list of satellites on which the speed calculations defined above are permitted.

7. Method for establishing the instantaneous speed of an object travelling on a known path comprising the steps of:

- establishing the approximate location and the direction of displacement of said object,
- receiving at least one signal emitted at a known, predetermined frequency of the object, from at least one satellite,
- measuring the frequency of the signal received by the object,
- measuring the frequency shift of the signal received relative to the predetermined frequency of the emitted signal,
- establishing the vectorial difference of the speeds of the object and of the satellite in the satellite-object direction depending on the frequency shift measured previously and resulting from the Doppler effect, and

**characterised in that** it comprises the step of:

- calculating the instantaneous speed of the object in the direction of displacement of the object from the vectorial difference determined previously and the direction of displacement of the object.

**Patentansprüche**

1. System zur sicheren Bestimmung der Momentangeschwindigkeit eines Objektes (1), das auf einer bekannten Strecke zirkuliert, insbesondere eines Fahrzeuges, wie eines Zuges, wobei das System umfasst:

- Mittel (3, 7) zur ungefähren Lokalisierung des Objektes und der Richtung seiner Bewegung, sowie
- Mittel (6) zum Empfang mindestens eines mit einer vorbestimmten, vom Objekt bekannten Frequenz emittierten Signals, das von mindestens einem Satelliten (4, 5) stammt, und
- Mittel (8) zur Berechnung und Analyse des Signals, umfassend:
- Mittel (10) zur Messung der Frequenzverschiebung des empfangenen Signals in Bezug auf die vorbestimmten Frequenz des emittierten Signals, die mit
- Mitteln (12) zur Bestimmung der Vektordifferenz der Geschwindigkeiten des Objektes und des Satelliten gemäß einer Richtung Satellit-Objekt als Funktion der Frequenzverschiebung, die zuvor gemessen wurde und vom Dopplereffekt herrührt, verbunden sind und

**dadurch gekennzeichnet, dass** die Mittel (8) zur Berechnung und Analyse Mittel (13) zur Berechnung der Momentangeschwindigkeit gemäß der Richtung der Bewegung des Objektes aus der zuvor bestimmten Vektordifferenz und der Richtung der Bewegung des Objektes umfassen und dass die Messungen der Frequenzverschiebung und die zugeordneten Berechnungen in unabhängiger Weise mit Signalen wiederholt werden, die von mindestens zwei unterschiedlichen Satelliten stammen, und dass die Mittel (8) zur Berechnung und Analyse darüber hinaus Mittel (14) zur Kombinierung der unabhängig erhaltenen Ergebnisse umfassen, um eine Momentangeschwindigkeit mit dem gewünschten Sicherheitsniveau zu erhalten.

2. System zur Bestimmung der Momentangeschwindigkeit eines Objektes nach Anspruch 1, **dadurch gekennzeichnet, dass** die Mittel (8) zur Berechnung und Analyse des Signals des Objektes angepasst sind an die Messung der aufgrund des Dopplereffektes auftretenden Frequenzverschiebung von zwei Signalen, die jedes von zwei verschiedenen Satelliten (4, 5) stammen, wobei die Mittel (13) zur Bestimmung der Momentangeschwindigkeit des Objektes angepasst sind, um diese Geschwindigkeit aus der Frequenzverschiebung der zwei Signale zu bestimmen.

3. System zur Bestimmung der Momentangeschwindigkeit eines Objektes nach Anspruch 2, **dadurch gekennzeichnet, dass** es Signale verwendet, die von vier Satelliten stammen, wobei die Mittel (14) zur Kombinierung die Momentangeschwindigkeiten verwenden, die von den Mitteln (13) zur Berechnung von sechs Satellitenpaaren erhalten werden, wobei jeder Satellit zu mindestens einem Paar gehört.

4. System zur Bestimmung der Geschwindigkeit eines Objektes nach Anspruch 1, **dadurch gekennzeichnet, dass** die Mittel zur Berechnung und Analyse des Signals außerdem stabile Mittel zur zeitlichen Referenzierung umfassen, wobei die Mittel zur Bestimmung der Momentangeschwindigkeit des Objektes angepasst sind, um diese Geschwindigkeit aus der Frequenzverschiebung aufgrund des Dopplereffektes eines einzigen Signals, das von einem einzigen Satelliten stammt, zu bestimmen.

5. System zur Bestimmung der Geschwindigkeit eines Objektes nach Anspruch 4, **dadurch gekennzeichnet, dass** es Signale verwendet, die von drei Satelliten stammen.

6. System zur Bestimmung der Momentangeschwindigkeit eines Objektes nach einem der vorhergehenden Ansprüche, **dadurch gekennzeichnet, dass** es Mittel zum Empfang des Signals umfasst, die an zwei bestimmten Punkten dieses Objektes angeordnet sind und geeignet sind, simultan an diesen zwei Punkten das Signal zu empfangen, wobei die Mittel zum Empfang mit Mitteln zur Berechnung des von dem Signal durchlaufenen Weges verbunden sind, die zur Bestimmung, dass das Signal zu den zwei Punkten der Empfangsmittel über unterschiedliche Wege gelangt ist, und dann zum Auslassen des Sendesatelliten dieses Signals aus der Liste der Satelliten während einer vorbestimmten Dauer geeignet sind, für die die zuvor bestimmten Geschwindigkeitsberechnungen autorisiert sind.

7. Verfahren zur Bestimmung der Momentangeschwindigkeit eines Objektes, das auf einer bekannten Strecke zirkuliert, die Schritte umfassend:

- Bestimmung des ungefähren Ortes und der Richtung der Bewegung des Objektes,
- Empfang mindestens eines mit einer vorbestimmten, vom Objekt bekannten Frequenz gesendeten Signals, das von mindestens einem Satelliten stammt,
- Messung der Frequenz des von dem Objekt empfangenen Signals,
- Messung der Frequenzverschiebung des empfangenen Signals in Bezug auf die vorbestimmte Frequenz des gesendeten Signals,
- Bestimmung der Vektordifferenz der Geschwindigkeiten des Objektes und des Satelliten gemäß der Richtung Satellit-Objekt als Funktion der zuvor gemessenen und aus dem Dopplereffekt resultierenden Frequenzverschiebung und

**dadurch gekennzeichnet, dass** es den Schritt der

- Berechnung der Momentangeschwindigkeit des Objektes gemäß der Richtung der Bewegung des Objektes aus der Vektordifferenz, die zuvor bestimmt wurde, und der Richtung der Bewegung des Objektes enthält.

_FIG.2_

_FIG.1_

EP 1 712 930 B1

_FIG.3_

_FIG.4_

## RÉFÉRENCES CITÉES DANS LA DESCRIPTION

**Documents brevets cités dans la description**

- WO 0203094 A
- US 5978735 A
- US 6292132 B1
- US 5977909 A, Harrison
- US 4405986 A, GRAY